# EUROPÄISCHE PATENTANMELDUNG

(11) **EP 3 410 103 A1**
(43) Veröffentlichungstag der Anmeldung: **05.12.2018**
(21) Anmeldenummer: 18179813.3
(22) Anmeldetag: 24.07.2009
(51) Int. Cl.: G01N 23/04, G01N 23/06, G01V 5/00, G01N 23/046

(54) **VORRICHTUNG ZUR AUTOMATISIERTEN PRÜFUNG UND/ODER VERMESSUNG EINER VIELZAHL IM WESENTLICHEN IDENTISCHER BAUTEILE MITTELS RÖNTGENSTRAHLUNG**

(62) Teilanmeldung aus: 09009615.7
(71) Anmelder: GE Sensing & Inspection Technologies GmbH, 50354 Hürth (DE)
(72) Erfinder: Wüstenbecker, Michael, 22952 Lütjensee (DE); Stuke, Ingo, 23858 Reinfeld (DE)
(74) Vertreter: Patentanwälte Bauer Vorberg Kayser

(57) **Zusammenfassung**

Eine Anlage (10) zur automatisierten Prüfung und/oder Vermessung einer Vielzahl im wesentlichen identischer Bauteile (12) mittels Röntgenstrahlung umfasst eine Prüf-/Messvorrichtung (11) mit einer Röntgenvorrichtung (24, 25), eine die Prüf-/Messvorrichtung (11) umgebende Schutzkabine (15), eine Fördervorrichtung (13) zum fortlaufenden Zu- und Abfördern von Bauteilen (12) zu der bzw. von der Prüf-/Messvorrichtung (11), und eine Steuer-/Auswerteeinheit (14), die zur automatisierten Steuerung der Anlage (10) sowie zur Auswertung der Röntgensignale eingerichtet ist. Die Prüf-/Messvorrichtung (11) umfasst einen Träger (17) und einen an dem Träger (17) kontinuierlich rotierbar gelagerten Rotor (18), wobei die Röntgenvorrichtung (24, 25) an dem Rotor (18) angeordnet ist und wobei die Fördervorrichtung (13) zur seriellen Förderung der Bauteile (12) durch den Rotor (18) und die Steuer-/Auswerteeinheit (14) zur computertomographischen Auswertung der Röntgensignale eingerichtet ist.

## Beschreibung

Die Erfindung betrifft eine Vorrichtung zur automatisierten Prüfung und/oder Vermessung einer Vielzahl im Wesentlichen identischer Bauteile mittels Röntgenstrahlung nach dem Oberbegriff von Anspruch 1.

Derartige Vorrichtungen werden beispielsweise zur automatischen seriellen Prüfung von Gussteilen verwendet, wobei die Vorrichtung in die Fertigungslinie des Herstellers eingebunden ist (inline-Prüfung). Bei bekannten Vorrichtungen dieser Art sind Röntgenquelle und Detektor auf einem mehrachsigen Manipulator angeordnet, wobei mittels einfacher Durchstrahlung Röntgenbilder des Prüfobjekts aufgenommen und ausgewertet werden. Jedoch lässt die Projektion des Volumens des geprüften Bauteils auf das Röntgenbild nur begrenzt Rückschlüsse auf die innere Struktur des Bauteils zu.

Um genaue Informationen über die dreidimensionale innere Struktur von Bauteilen zu erhalten, ist die Laboruntersuchung einzelner Bauteile mittels hochauflösender Mikrotomographieanlagen bekannt. Dabei sind Röntgenröhre und Detektor um mehrere Translationsachsen verstellbar auf einem feststehenden Träger montiert und das Bauteil wird mittels eines Drehtellers um eine vertikale Achse rotiert. Derartige Vorrichtungen eignen sich nicht für die automatische serielle inline-Prüfung von Bauteilen, insbesondere weil die lange Dauer für die Handhabung und hochaufgelöste Untersuchung eines Bauteils mit den Taktzeiten in einer Fertigungslinie unverträglich ist.

Die Aufgabe der Erfindung besteht darin, eine zur inline-Prüfung von Bauteilen geeignete Vorrichtung bereitzustellen, mit der Informationen über die innere Struktur der Bauteile erhalten werden können.

Die Erfindung löst diese Aufgabe mit den Mitteln der unabhängigen Ansprüche. Die computertomographische Auswertung der Röntgensignale ermöglicht es in an sich bekannter Weise, Informationen über die dreidimensionale innere Struktur der Bauteile, beispielsweise die genaue Lage und Form von Lufteinschlüssen in Gussteilen, zu erhalten. Die Anordnung der Röntgenvorrichtung auf einem kontinuierlich rotierbaren Rotor ermöglicht es, die Bauteile während der Prüfung seriell durch den Rotor hindurchzufördern; ein zusätzlicher Manipulator wie beispielsweise ein Drehteller ist entbehrlich. Auf diese Weise kann eine automatische serielle Untersuchung von Bauteilen in einer kurzen Zeitdauer, die mit den Taktzeiten in einer Fertigungslinie verträglich ist, erfolgen.

Die Erfindung ist abgegrenzt gegenüber Vorrichtungen zur Prüfung von Gepäckstücken, deren Auswertung außerordentlich breit auf beliebige Gepäckstückinhalte eingestellt sein muss. Dagegen kann die erfindungsgemäße Vorrichtung zur Untersuchung einer Vielzahl im Wesentlichen identischer Bauteile zweckmäßigerweise maßgeschneidert auf den zu prüfenden Bauteiltyp, oder einen Mix einer begrenzten Zahl von Bauteiltypen, eingestellt sein. Diese Vorrichtungen sind daher insbesondere hinsichtlich der Röntgenparameter und der Auswertealgorithmen vollkommen unterschiedlich ausgeführt. Die erfindungsgemäße Prüf-/Messvorrichtung ist zweckmäßigerweise zur automatischen Erkennung von Materialdefekten, wie Gaseinschlüssen; Porositäten oder Einschlüsse von Materialien höherer Dichte, in einem im Wesentlichen homogenen Werkstoff eingerichtet. Die erfindungsgemäße Vorrichtung kann jedoch zusätzlich oder alternativ zur Werkstoffprüfung zur Vermessung von inneren und äußeren Bauteilstrukturen (Metrologie) verwendet werden. Auf eine separate Koordinatenmessvorrichtung kann dann gegebenenfalls verzichtet werden.

Vorzugsweise ist die Anlage zur Erzielung einer Volumen-Auflösung im Röntgenbild von kleiner oder gleich 1 mm eingerichtet. Auch hierdurch ist die Erfindung gegenüber Vorrichtungen zur Prüfung von Gepäckstücken abgrenzbar, die in der Regel mit einer Auflösung von einigen mm arbeiten.

Zur Erzielung einer sub-mm-Auflösung umfasst die Fördervorrichtung im Bereich der Ringeinheit vorzugsweise eine Fördereinrichtung mit im Wesentlichen konstanter Vorschubgeschwindigkeit. Im Wesentlichen konstant bedeutet vorzugsweise, dass Schwankungen der Vorschubgeschwindigkeit maximal 10%, vorzugsweise maximal 5% betragen.

Im Hinblick auf die in Fertigungsumgebungen, beispielsweise Gießereien, herrschenden rauen Bedingungen ist die Schutzkabine vorzugsweise gegenüber der Umgebung im Wesentlichen luftdicht abgedichtet, um ein Eindringen von Staub und Feuchtigkeit in die Schutzkabine und die darin angeordnete Prüf-/Messvorrichtung zu vermeiden. Um ein Eindringen von Staub und Schmutz durch die Öffnungen zum Zu- und Abfördern der Bauteile zu vermeiden, umfasst die Anlage vorzugsweise ein die beiden Öffnungen verbindendes, durch den Rotor laufendes und einen geschlossenen Förderkanal definierendes Rohr, das weiter vorzugsweise mit der Schutzkabine luftdicht verbunden ist. Weiterhin ist vorzugsweise ein Kühlaggregat zur Kühlung des Innenraums der Schutzkabine vorgesehen. Schließlich umfasst die Vorrichtung vorzugsweise eine Einrichtung zur überdruckbeaufschlagung der Schutzkabine relativ zu der Umgebung. Vorzugsweise ist die Schutzkabine zum Abschirmung der Umgebung gegen Röntgenstrahlung eingerichtet, insbesondere mittels einer Röntgenstrahlung absorbierenden, beispielsweise Blei enthaltenden Schicht.

Vorzugsweise umfasst die Fördervorrichtung ein unterbrechungslos durch die Prüf-/Messvorrichtung geführtes, weitgehend strahlentransparentes Förderband, wodurch Probleme im Zusammenhang mit einem Messspalt in der Fördervorrichtung auf einfache Weise vermieden werden.

Vorzugsweise ist die Fördervorrichtung im Bereich der Prüf-/Messvorrichtung zur Anpassung an Bauteile mit unterschiedlichen Abmessungen höhenverstellbar, damit eine in der Höhe im Wesentlichen zentralisierte Durchführung der Bauteile durch die Prüf-/Messvorrichtung sichergestellt werden kann.

Die Erfindung wird im Folgenden anhand vorteilhafter Ausführungsformen unter Bezugnahme auf die beigefügten Figuren erläutert. Dabei zeigt:
- Fig. 1:: eine Anlage zur Prüfung von Bauteilen in einer Fertigungslinie; und
- Fig. 2:: eine Vorrichtung zur Prüfung von Bauteilen in einer anderen Ausführungsform.

Die Anlage 10 umfasst eine Prüf-/Messvorrichtung 11, eine Fördervorrichtung 13 zum seriellen Zu- und Abfördern einer Vielzahl im Wesentlichen gleichartiger zu prüfender Bauteile 12 zu der bzw. von der Prüf-/Messvorrichtung 11, eine Steuer-/Auswerteeinheit 14 und eine die Prüf-/Messvorrichtung 11 umgebende Schutzkabine 15. Prüf-/Messvorrichtung ist dabei als Prüf- und/oder Messvorrichtung zu verstehen. Die Prüf-/Messanlage 10 ist zur Einbindung in eine Fertigungslinie beispielsweise in einer Gießerei für metallische Gussteile 12 geeignet.

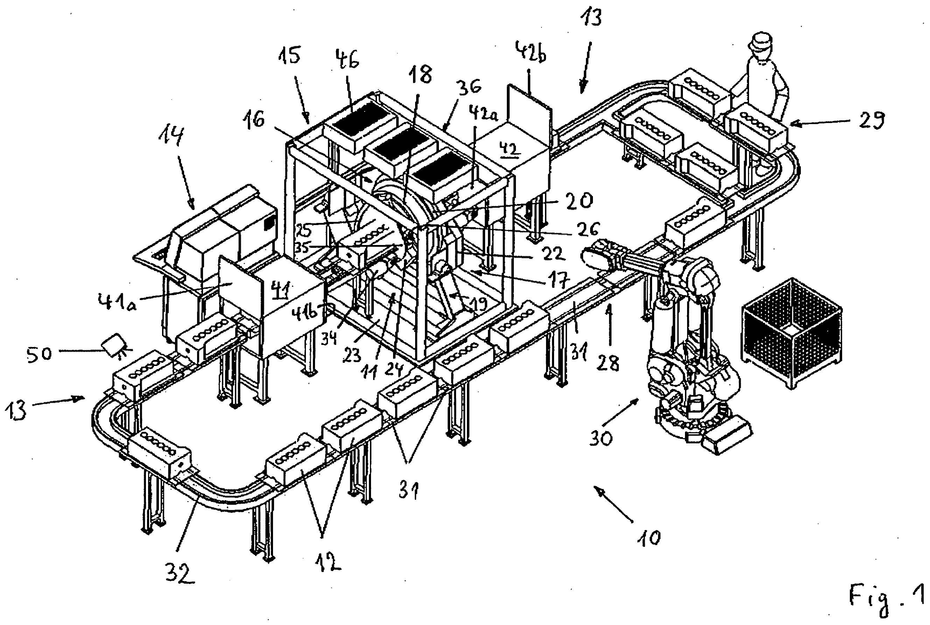

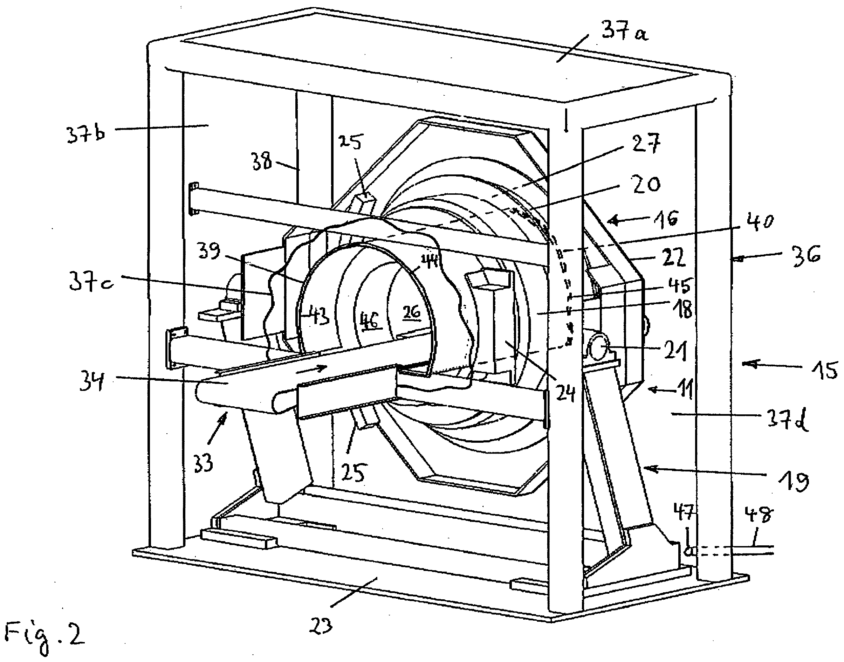

Die Prüf-/Messvorrichtung 11 umfasst einen während der Prüfung feststehenden Träger 17 und einen ringförmigen Rotor 18. Der Träger 17 umfasst ein auf einer Bodenplatte 23 verankertes Fußgestell 19 und ein darauf ruhendes, ringförmiges Tragelement 22, hier in Form einer achteckigen Platte. Das ringförmige Tragelement 22 bildet ein ringförmiges Rotationslager 20 für den Rotor 18 aus. Rotationslager 20, Rotor 18 und gegebenenfalls Tragelement 22 bilden eine Ringeinheit 16, die eine zentrale Ringöffnung 26 zur Durchförderung von Bauteilen 12 durch die Ringeinheit 16 aufweist. Um eine horizontale Ausrichtung zu ermöglichen, kann die Ringeinheit 16, wie in den Figuren gezeigt, mittels eines horizontalen Schwenklagers 21 beispielsweise in einem Bereich von +-30° gegenüber dem Fußgestell 19 neigbar sein, siehe Ausführungsformen gemäß Fig. 1 und 2. Die Bauteile 12 werden vorzugsweise axialparallel, d.h. parallel zu der Rotorachse, durch den Rotor 18 gefördert.

An dem Rotor 18 sind einander gegenüberliegend eine Röntgenröhre 24 und ein Röntgendetektor 25 befestigt. Die vorzugsweise als Drehanodenröhre ausgebildete Röntgenröhre 24 ist vorzugsweise vom Fächerstrahl- (fan beam) oder Kegelstrahl- (cone beam) Typ. Die Röntgenröhre 24 ist zweckmäßigerweise zur Ausleuchtung des gesamten Detektors 25 eingerichtet und weist zu diesem Zweck vorzugsweise in einer Richtung einen Strahlwinkel von mindestens 40°, vorzugsweise mindestens 60° auf. Zur Erzielung einer sub-mm Bildauflösung liegt die Fokusgröße des Röntgenstrahls vorzugsweise unterhalb von 1 mm, weiter vorzugsweise unterhalb von 0.7 mm. Die Röhre 24 wird vorzugsweise mit einer Energie von mindesten 80 kV, weiter vorzugsweise mindestens 100 kV, weiter vorzugsweise mindestens 120 kv, beispielsweise etwa 140 kV betrieben. Im Hinblick auf ein bevorzugtes hohes Durchdringungsvermögen sind höhere Röntgenenergien bis 450 kV denkbar. Zur Reduzierung der Prüf- bzw. Messdauer wird die Röntgenröhre 24 vorzugsweise mit einer Dauerleistung von mindestens 1 kW betrieben. Um Probleme aufgrund übergroßer Wärmeerzeugung zu vermeiden, beträgt die Dauerleistung vorzugsweise weniger als 10 kW.

In einer nicht gezeigten Ausführungsform kann nur die Röhre 24 an dem Rotor 18 befestigt sein, während der stationäre Detektor 25 einen 360°-Ring ausbildet.

Der Röntgendetektor 25 ist vorzugsweise digital mit einer direkten Umwandlung der auftreffenden Röntgenstrahlung in elektrische Zählpulse (Counts). Es handelt sich vorzugsweise um einen Zeilendetektor mit einer Mehrzahl von vorzugsweise mindestens 16 parallelen Zeilen. Der Detektor 25 weist vorzugsweise eine ausreichende Länge auf, um einen möglichst großen Winkelbereich der von der Röhre 24 abgestrahlten Röntgenstrahlung zu erfassen. Er ist vorzugsweise bananenförmig gebogen, so dass die sensitive Fläche möglichst überall einen im Wesentlichen konstanten Abstand zu dem Quellpunkt der Röntgenröhre 24 aufweist. Zur Erzielung einer sub-mm Bildauflösung beträgt die Pixelgröße des Detektors 25 höchstens 1 mm, vorzugsweise höchstens 0.7 mm.

Die zweckmäßigerweise in der Steuer-/Auswerteeinheit 14 durchgeführte Korrektur zur Kompensation des Röntgenstrahlhärtungs-(beam hardening) Effekts ist auf die Untersuchung typischer Werkstoffe, bspw. Metalle, Legierungen, Verbundwerkstoffe, Aluminium, Eisen, etc. abgestimmt.

während der Röntgenprüfung eines Bauteils 12 wird der Rotor 18 mittels nicht gezeigter, an dem Tragelement 22 befestigter Rotationsantriebe kontinuierlich um die zentrale Längsachse der Ringeinheit 16 rotiert, wobei pro Bauteil 12 eine Vielzahl von vollständigen 360°-Umdrehungen des Rotors 18 durchgeführt werden. Die elektrische Versorgung der mit dem Rotor 18 rotierenden Röntgenröhre 24 und Röntgendetektor 25 erfolgt mittels einer zwischen dem Rotor 18 und dem Tragelement 22 angeordneten Schleifringanordnung 27. Die Rotationsachse des Rotors 18 bzw. Längsachse der Ringeinheit 16 ist im Wesentlichen parallel zur Förderrichtung der Bauteile durch die Prüf-/Messvorrichtung 11, vorzugsweise im Wesentlichen horizontal, ausgerichtet.

Die Fördervorrichtung 13 ist wie im Ausführungsbeispiel gemäß Fig. 1 vorzugsweise als Förderstrasse, d.h. als translatorischer Förderer ausgebildet. Zur Einbindung in eine Fertigungslinie für die Bauteile 12 weist die Förderstrasse einen Beladeabschnitt 28 und einen Entladeabschnitt 29 auf. Die Beladung der Förderstraße 13 erfolgt im Ausführungsbeispiel gemäß Fig. 1 mittels eines Roboters 30, während die Entladung manuell erfolgt. Be- und Entladung können selbstverständlich auch auf andere Weise erfolgen.

Im Ausführungsbeispiel gemäß Fig. 1 umfasst die Fördervorrichtung 13 Förderschlitten 31 zur Aufnahme jeweils eines Bauteils 12 und mindestens eine Schiene 32, entlang der die Förderschlitten 31 verschiebbar geführt sind. Die Fördervorrichtung 13 kann jedoch auch anders ausgeführt sein, insbesondere unter Verwendung von Förderbändern.

Die Fördervorrichtung 13 ist vorzugsweise zur Förderung der Bauteile 12 durch die Prüf-/Messvorrichtung 11 mit im Wesentlichen konstanter vorschubgeschwindigkeit eingerichtet, d.h. mit Schwankungen in der Vorschubgeschwindigkeit unterhalb von 10%, vorzugsweise unterhalb von 5%. Zu diesem Zweck umfasst die Fördervorrichtung 13 im Bereich der Prüf-/Messvorrichtung 11 vorzugsweise einen separaten Antrieb 34, vorzugsweise mit Servomotoren, zur Erzielung der geforderten Konstanz in der Vorschubgeschwindigkeit. Nach dem zuvor Gesagten weist der Antrieb 34 für die Förderung durch die Prüf-/Messvorrichtung 11 zweckmäßigerweise eine höhere Geschwindigkeitskonstanz auf als weitere nicht gezeigte Antriebe für die Zuförderung zu bzw. die Abförderung von der Prüf-/Messvorrichtung 11.

In der bevorzugten Ausführungsform gemäß Fig. 2 ist eine separate Fördereinrichtung 33 mit einem unterbrechungslos durchgehenden Fördermittel 34, insbesondere einem Förderband, zur Förderung der Bauteile 12 durch die Prüf-/Messvorrichtung 11 vorgesehen. Das Fördermittel 34 ist zweckmäßigerweise im Wesentlichen transparent für Röntgenstrahlung ausgebildet. Das unterbrechungslos durchgehende, weitgehend strahlungstransparente Fördermittel 34 hat den Vorteil, dass die Fördereinrichtung 33 keinen Spalt zum Durchlassen der Röntgenstrahlung aufweisen muss.

Dagegen ist in der Ausführungsform gemäß Fig. 1 die Fördervorrichtung 13 von beiden Seiten in die Prüf-/Messvorrichtung 11 hineingeführt, so dass ein möglichst kleiner Spalt 35 zur ungehinderten Durchführung der Röntgenstrahlung verbleibt. In diesem Fall ist eine Ausführung der Fördervorrichtung 13 im Bereich der Prüf-/Messvorrichtung 11 mit Schiene 32 und Förderschlitten 31 vorteilhaft, weil die Förderschlitten 31 die positions- und geschwindigkeitsgenaue Überbrückung des Spaltes ermöglichen.

Die Fördervorrichtung 13 ist nach dem zuvor Gesagten auf der gesamten Förderstrecke zwischen dem Beladeabschnitt 28 und dem Entladeabschnitt 29 translatorisch ausgebildet. Auf umständliche Karussell-artige Schwenkförderer zum Fordern der Bauteile 12 von der Förderstrasse 13 zu der Prüf-/Messvorrichtung 11 und zurück kann daher verzichtet werden. Auch auf eine anderweitige Manipulation der Bauteile 12, beispielsweise eine Rotation der Bauteile 12 um eine vertikale Achse während der Röntgenuntersuchung, kann verzichtet werden.

Aufgrund der während der Prüfung erfolgenden translatorischen Förderung des zu prüfenden Bauteils 12 durch die Prüf-/Messvorrichtung 11 parallel zur Rotationsachse des Rotors 18 und der gleichzeitigen kontinuierlichen Rotation des Röntgensystems 24, 25 um das zu prüfende Bauteil 12 ergibt sich insgesamt eine helixartige Bewegung des Röntgensystems 24, 25 um das zu prüfende Bauteil 12. Die Steuer-/Auswerteeinheit 14 umfasst einen schnellen CT-Rekonstruktionsalgorithmus, um die aufgenommenen Röntgendaten von der Helixgeometrie in eine Volumen- bzw. Voxeldarstellung zu überführen. Die Steuer-/Auswerteeinheit 14 umfasst weiterhin einen Algorithmus zur Analyse des Volumenbildes je nach vorgesehener Anwendung. Dies kann insbesondere eine automatische Erkennung innerer Defekte oder Anomalien des Bauteils 12, beispielsweise Lufteinschlüsse, anhand vorbestimmter Prüfparameter, die grundsätzlich bekannt sind und daher nicht näher erläutert werden müssen, umfassen. Jedes Bauteil kann gegebenenfalls als "regulär" oder "irregulär" eingestuft und optional entsprechend optisch markiert oder automatisch aussortiert werden. Schließlich kann die Steuer-/Auswerteeinheit 14 eine Kommunikationseinheit zur Datenübetragung mit einer externen Einheit, beispielsweise der Steuerzentrale der Fertigungsanlage, aufweisen.

Zusätzlich oder alternativ zu dem schraubenförmigen Scan-Modus kann die Steuer-/Auswerteeinheit 14 auch die Durchführung von Axialscans und/oder Scans von lediglich einem Teil eines Bauteils 12, z.B. einzelner Scheiben oder an bestimmten Positionen, durchführen.

Alternativ oder zusätzlich zur Erkennung innerer Defekte oder Anomalien des Bauteils 12 kann die Steuer-/Auswerteeinheit 14 auch zur Bestimmung der dreidimensionalen geometrischen Abmessungen der Bauteile 12, d.h. innerer und äußerer Bauteilstrukturen, aus den Röntgendaten eingerichtet sein. Auf eine separate Koordinatenmessvorrichtung kann dann gegebenenfalls verzichtet werden.

Zur Abschirmung der Umgebung gegenüber der von der Röntgenröhre 24 erzeugten Röntgenstrahlung weist die Anlage 10 eine die Prüf-/Messvorrichtung 11 umgebende Strahlenschutzkabine 15 auf. Die Strahlenschutzkabine 15 umfasst ein Gerüst 36, das beispielsweise aus Metallrohren oder -stäben bestehen kann, und plattenförmige Wandelemente 37a, 37b, 37c, 37d, ..., die in Fig. 2 nur andeutungsweise für die Deckenwand 37a, die dem Betrachter abgewandte Seitenwand 37b, die dem Betrachter zugewandte vordere Wand 37c, durch die die Bauteile 12 in die Schutzkabine 15 gefördert werden, und die dem Betrachter abgewandte hintere Wand 37d, durch die die Bauteile 12 aus der Schutzkabine 15 abgefördert werden, gezeigt sind. Die Wandelemente 37 enthalten eine Röntgenstrahlung absorbierende, insbesondere bleihaltige Schicht ausreichender Dicke.

Zur Durchführung der Bauelemente 12 durch die Schutzkabine 15 sind eine Eintrittsöffnung 39 und eine entsprechende Austrittsöffnung 40 in den Wandelementen 37c, 37d vorgesehen. Jeder Durchführungsöffnung 39, 40 ist jeweils eine Durchführungsschleuse 41, 42 zugeordnet, die jeweils einen Schieber 41a, 42a zum Verschließen einer Eingangsöffnung der Durchführungsschleuse 41, 42 und jeweils einen Schieber 41b, 42b zum Verschließen einer Ausgangsöffnung der Durchführungsschleuse 41, 42 aufweist. Die Durchführungsschleusen 41, 42 sowie die Schieber 41a, 41b, 42a, 42b sind ebenfalls zur im Wesentlichen vollständigen Absorption von Röntgenstrahlung eingerichtet. Im Betrieb ist zu jeder Zeit ein Schieber 41a, 41b bzw. 42a, 42b einer Durchführungsschleuse 41, 42 geschlossen, so dass Strahlenschutz jederzeit gewährleistet ist.

Um das Eindringen von Staub und Feuchtigkeit in die Schutzkabine 15 zu verhindern, ist diese luftdicht abgeschlossen, beispielsweise mithilfe von Dichtelementen 38 zwischen den Wandelementen 37, dem Gerüst 36 und der Bodenplatte 23. Zur Erzielung eines im Wesentlichen vollständig, d.h. abgesehen von etwaigen Klimatisierungsöffnungen, abgedichteten Innenraums für die Prüf-/Messvorrichtung 11 ist ein zweckmäßigerweise im Wesentlichen strahlentransparentes Rohr 43 vorgesehen, das sich von einer Durchführungsöffnung 39 zur anderen Durchführungsöffnung 40 durch die Schutzkabine 15 erstreckt und durch die Ringöffnung 26 der Ringeinheit 16 geführt ist. Die Fördervorrichtung 13 ist im Bereich der Prüf-/Messvorrichtung 11 durch das Rohr 43 geführt, das einen Förderkanal 46 bzw. Fördertunnel definiert. Das Rohr 43 ist vorzugsweise frei von Öffnungen in der Rohrwand, so dass mit der Fördervorrichtung 13 bzw. den darauf angeordneten Bauteilen 12 transportierte Schmutzpartikel nicht in die Prüf-/Messvorrichtung 11 gelangen können. Es ist an seinen Enden vorzugsweise luftdicht mit den Wandelementen 37c, 37d an der die Durchführungsöffnungen 39, 40 definierenden Kante verbunden, insbesondere mithilfe von entsprechenden Dichtelementen 44, 45. Der Durchmesser des Rohrs 43 ist zweckmäßigerweise an den Innendurchmesser der Ringeinheit 16 angepasst, um die Prüfung möglichst großer Bauteile 12 zu ermöglichen. Nach dem Zuvor gesagten ist die Prüf-/Messvorrichtung 11 im Wesentlichen vollständig gekapselt in der Schutzkabine 15 angeordnet.

Um die im Betrieb der Prüf-/Messvorrichtung 11 erzeugte Wärme abzuführen und den Innenraum der Schutzkabine 15 auch in sehr warmen Umgebungen, z.B. einer Gießerei, auf einer hinreichend niedrigen Betriebstemperatur zu halten, ist an der Schutzkabine 15 mindestens ein temperaturgeregeltes, insbesondere elektrisch betriebenes Kühlaggregat 46, beispielsweise eine Klimaanlage, angebracht.

Damit im Falle etwaiger Undichtigkeiten, sowie durch etwaige Funktionsöffnungen wie beispielsweise einer Abluftöffnung für die Klimaanlage 46, kein Staub /Feuchtigkeit in die Schutzkabine 15 gelangen kann, ist vorzugsweise eine Einrichtung zur Überdruckbeaufschlagung der Kabine 15 vorgesehen. Dabei kann es sich beispielsweise um einen Druckluftanschluss 47 handeln, der über eine Druckluftleitung 48 mit einer externen Druckluftquelle verbindbar ist. Die Überdruckbeaufschlagung kann alternativ auch über das Kühlaggregat 46 erfolgen.

Aufgrund der Schutzkabine 15 und des Rohrs 43, das die Ringeinheit 16 auch vor Beschädigung durch fehlpositionierte Bauteile 12 schützt, ist ein separates Gehäuse für die Ringeinheit 16 entbehrlich. Der Verzicht auf ein solches Gehäuse für die Ringeinheit 16 erleichtert wiederum die Wärmeabfuhr aus der Ringeinheit 16.

Die Fördervorrichtung 13 kann im Bereich der Prüf-/Messvorrichtung 11 zur Anpassung an Bauteile 12 mit unterschiedlichen Abmessungen höhenverstellbar sein, damit eine im Wesentlichen mittige Durchführung der Bauteile 12 durch die Ringeinheit 16 sichergestellt werden kann.

Die Anlage 10 kann optional eine der Prüf-/Messvorrichtung 11 vorgeschaltete Vorrichtung 50 zur Identifikation des Bauteiltyps beispielsweise mithilfe einer optischen Kamera und einem Bilderkennungsalgorithmus umfassen. In Abhängigkeit von dem Ergebnis der Identifikation können Parameter der Mess-/Prüfvorrichtung 11 auf den jeweiligen Bauteiltyp eingestellt und/oder das Ergebnis der Röntgenuntersuchung mit dem individuellen Bauteil 12, beispielsweise mithilfe der Seriennummer, in Beziehung gesetzt werden. Alternativ kann die Identifikation des Bauteiltyps auch aus dem dreidimensionalen Röntgenbild mittels eines entsprechenden Erkennungsalgorithmus erfolgen.

## Patentansprüche

1. Anlage (10) zur automatisierten Prüfung und/oder Vermessung einer Vielzahl im wesentlichen identischer Bauteile (12) mittels Röntgenstrahlung, umfassend eine Prüf-/Messvorrichtung (11) mit einer Röntgenvorrichtung (24, 25), eine die Prüf-/Messvorrichtung (11) umgebende Schutzkabine (15), eine Fördervorrichtung (13) zum fortlaufenden Zu- und Abfördern von Bauteilen (12) zu der bzw. von der Prüf-/Messvorrichtung (11), und eine Steuer-/Auswerteeinheit (14), die zur automatisierten Steuerung der Anlage (10) sowie zur Auswertung der Röntgensignale eingerichtet ist, **dadurch gekennzeichnet, dass** die Prüf-/Messvorrichtung (11) einen Träger (17) und einen an dem Träger (17) kontinuierlich rotierbar gelagerten Rotor (18) umfasst, wobei die Röntgenvorrichtung (24, 25) an dem Rotor (18) angeordnet ist und wobei die Fördervorrichtung (13) zur seriellen Förderung der Bauteile (12) durch den Rotor (11) und die Steuer-/Auswerteeinheit (14) zur computertomographischen Auswertung der Röntgensignale eingerichtet ist.

2. Anlage nach Anspruch 1, wobei die Schutzkabine (15) gegenüber der Umgebung im Wesentlichen luftdicht abgedichtet ist.

3. Anlage nach Anspruch 1 oder 2, umfassend ein sich durch den Rotor (18) erstreckendes, einen Fördertunnel (46) definierendes Rohr (43).

4. Anlage nach Anspruch 3, wobei das Rohr (43) mit der Schutzkabine (15) luftdicht verbunden ist.

5. Anlage nach einem der vorangehenden Ansprüche, umfassend ein Kühlaggregat (46) zur Kühlung des Innenraums der Schutzkabine (15).

6. Anlage nach einem der vorangehenden Ansprüche, umfassend eine Einrichtung (47, 48) zur Überdruckbeaufschlagung der Schutzkabine (15).

7. Anlage nach einem der vorangehenden Ansprüche, wobei die Schutzkabine (15) zur Abschirmung der Umgebung gegen Röntgenstrahlung eingerichtet ist.

8. Anlage nach einem der vorangehenden Ansprüche, wobei die die Steuer-/Auswerteeinheit (14) zur individuellen Einstellung der Betriebsparameter der Anlage (10) je nach Typ der zu prüfenden bzw. zu vermessenden Bauteile (12) eingerichtet ist.

9. Anlage nach einem der vorangehenden Ansprüche, wobei die die Steuer-/Auswerteeinheit (14) zur automatischen Erkennung von Materialdefekten wie Gaseinschlüssen, Porositäten sowie Einschlüsse von Materialien höherer Dichte in einem im Wesentlichen homogenen Werkstoff eingerichtet ist.

10. Anlage nach einem der vorangehenden Ansprüche, wobei die Anlage zur Erzielung einer Auflösung im Röntgenbild von kleiner oder gleich 1 mm eingerichtet ist.

11. Anlage nach einem der vorangehenden Ansprüche, wobei die Fördervorrichtung (13) im Bereich der Prüf-/Messvorrichtung (11) zur Förderung der Bauteile (12) mit im Wesentlichen konstanter Vorschubgeschwindigkeit eingerichtet ist.

12. Anlage nach einem der vorangehenden Ansprüche, wobei die Fördervorrichtung (13) ein unterbrechungslos durch die Prüf-/Messvorrichtung (11) geführtes Förderband (34) umfasst.

13. Anlage nach einem der vorangehenden Ansprüche, wobei die Fördervorrichtung (13) im Bereich der Prüf-/Messvorrichtung (11) höhenverstellbar ist.

14. Anlage nach einem der vorangehenden Ansprüche, wobei die Röntgenquelle (24) mit einer Spannung von mindestens 80 kV betrieben wird.

15. Anlage nach einem der vorangehenden Ansprüche, wobei die Röntgenquelle (24) mit einer Dauerbetriebsleistung von mindestens 1 kW betrieben wird.
